# EUROPEAN PATENT APPLICATION

(11) **EP 3 101 178 A1**
(43) Date of publication of application: **07.12.2016**
(21) Application number: 15170669.4
(22) Date of filing: 04.06.2015
(51) Int. Cl.: E02B 11/00, A01G 25/06, F16L 11/20

(54) **METHOD FOR MANUFACTURING A DRAIN SYSTEM**

(71) Applicant: Pipelife Nederland B.V., 1601 MA Enkhuizen (NL)
(72) Inventor: Smid, Lolke Simon, 1601 MA Enkhuizen (NL); Aartsen, Michel Wilhelmus Petrus Johannes Maria, 1601 MA Enkhuizen (NL)
(74) Representative: Nederlandsch Octrooibureau

(57) **Abstract**

A method for manufacturing a drain system comprises the steps of:
- providing a drain pipe ( 5) provided with drain apertures (8),
- providing a web of filter material (2),
- simultaneously displacing the drainage pipe (5) and the web of filter material (2) in longitudinal direction thereof,
- while displacing the web of filter material (2), applying strips (3) on said web which are located next to each other in transverse direction of the web and which extend in the longitudinal direction of the web,
- while simultaneously displacing the drain pipe (5) and the web of filter material (3), applying the web of filter material with the strips around the drain pipe.

## Description

The invention is related to the field of manufacturing a drain system comprising a drain pipe provided with drain apertures, a sleeve of filter material around the drain pipe, strips which extends in the longitudinal direction of the sleeve which are connected to said sleeve and which are located on the surface of the sleeve facing said drain pipe.

A drain system of this type is disclosed in US-A-4909665. According to said prior art drain system, a grid mesh of strips is positioned around the drain pipe and covered with a web of filter material. In a particular embodiment, the grid mesh and the web of filter material are preassembled and subsequently wrapped around the drain pipe. This prior art manufacturing method has the drawback that it is cumbersome and requires several distinct steps up to completion of the drain system: first of all a preassembly of grid mesh and filter material should be prepared, and subsequently said preassembly is to be wrapped or rolled around the drain pipe. Moreover, as such preassemblies will have a limited length, a multitude of preassemblies is to be arranged along the length of the drain pipe which makes the manufacturing process even more complicated and expensive.

A further method for manufacturing a drain system is disclosed in DE-B-1254092. According to said prior art method, a web of filter material together with a drain pipe is displaced in longitudinal direction. By means of a stationary shaping mould, the web of filter material is gradually wrapped around the drain pipe and formed into a sleeve in the process of advancing the pipe and the web through the shaping mould. The drain system thus obtained has the disadvantage that the filter sleeve is directly lying upon the drain openings of the drain pipe As a result, the area of the filter sleeve which is available for filtration is severely limited: only those parts of the web of filter material which overly a drain opening take part in the filter action. The rest of the web of filter material abuts the closed wall of the drain pipe, for which reason that part is ineffective. Consequently, the design filter capacity of said prior art drain system is limited.

The object of the invention is therefore to provide a method for manufacturing a drain system which lacks these disadvantages. Said method should be more efficient than the prior art methods, and provide a drain system with an optimal and sustainable filter capacity.

Said object is achieved through a method for manufacturing a drain system, comprising the steps of:
- providing a drain pipe having drain apertures,
- providing an elongate web of filter material,
- simultaneously displacing the drainage pipe and the web of filter material in longitudinal direction thereof,
- while displacing the web of filter material, applying strips on said web which are located next to each other in transverse direction of the web and which extend in the longitudinal direction of the web,
- subsequently applying the web of filter material with the strips around the drain pipe.

The method according to the invention has the advantage that it can be carried out in a continuous fashion, by constantly feeding the drain pipe, the web of filter material and the strips to a forming station. Thus, the drain system can be manufactured in an automated and continuous process with only a limited need for skilled labour. The drain system thus obtained may directly be rolled onto a reel for further use or storage.

The strips provide support for the filter sleeve around the drain pipe, in such a way that the drain apertures thereof become less prone to clogging and a better and more efficient use of the filter material becomes possible. Preferably, the strips are applied onto the surface of the web of filter material which is to face the drain pipe. Thereby, a spacing is obtained between the filter material and the drain pipe in such a way that virtually the full surface of the sleeve becomes available for filtering purposes.

Preferably, the strips are adhered to the web of filter material. In that case, the web and the strips can be treated as a unity which simplifies the step of wrapping around the drain pipe. After the web and the strips have thus been formed around the drain pipe, the longitudinal edges of the web of filter material applied around the drain pipe can be connected to each other, such as by gluing or by application of a hot melt. Preferably, the strips are obtained onto the web of filter material by extrusion. The still weak material of the strips will directly adhere to the surface of the web of filter material. Such filter material usually has a somewhat fibrous character which makes that the filter material will become entangled in the still hot and soft strip material.

The drain pipe itself may be carried out in different ways. According to a first possibility, the drain pipe has a smooth outer surface in which the drain openings emanate. Preferably however, a corrugated pipe is provided having crests and valleys which extend in the circumferential direction of the drain pipe. In that case, the strips abut the top of the crests. As the drain openings are positioned in the valleys of the drain pipe, a relatively large radial distance is obtained with respect to the filter material. This makes that a relatively large portion of said filter material will be effective.

As mentioned before, the drain system has the advantage that it can be manufactured in a continuous process. This is also obtained through the step of applying the web of filter material with the strips around the drain pipe while displacing the web of filter material and the drain pipe in the longitudinal direction thereof. Furthermore said process may comprise the steps of providing a shaping mould around the drain pipe and feeding the web of filter material through the shaping mould while transforming the web of filter material into a sleeve.

The invention is furthermore related to an apparatus for carrying out the method according as described before, comprising a frame having a roll suspension means for accommodating a roll of a web of filter material, a support device for supporting and displacing a drain pipe in the longitudinal direction thereof, a shaping mould around the support device for the purpose of transforming the web of filter material into a closed sleeve around the drain pipe, an extrusion device between the roll suspension means and the shaping mould for extruding a series of strips on the web of filter material while displacing said web of filter material in longitudinal direction and a closure device for connecting the longitudinal edges of the sleeve to each other while displacing said sleeve.

Also, the invention is related to a drain system manufactured according to the method described before, comprising a drain pipe having alternating crests and valleys which extend in the circumferential direction of the drain pipe and provided with drain apertures, a sleeve of filter material around the drain pipe, strips which extends in the longitudinal direction of the sleeve which are connected to said sleeve and which are located on the surface of the sleeve facing said drain pipe, wherein the strips are freely abutting the crests of the drain pipe. This means that the strips are not connected or adhered to the crests of the drain pipe, but are merely resting thereon. The strips interact with the crest solely through friction. Through such friction, the filter material is held in proper position with respect to the pipe.

The invention will be described further with respect to the figures.
Figure 1 shows a view in perspective of the process of manufacturing the drain system.
Figure 2 shows the longitudinal section according to II of figure 1.
Figure 3 shows the cross section according to III-III of figure 1.

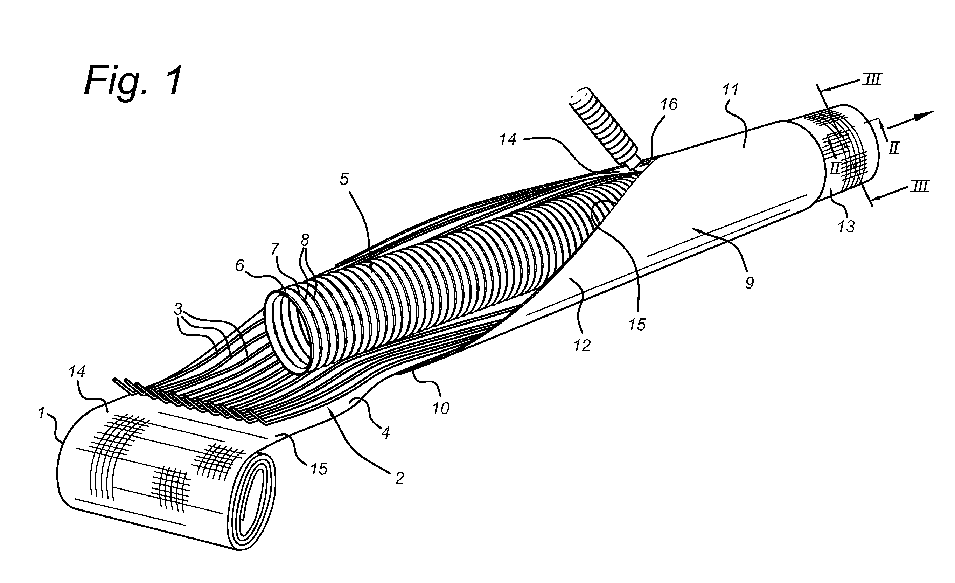

In the process as shown in figure 1, a roll 1 containing a web of filter material 2 is unrolled according to the direction as indicated by the arrow to the right. During this movement of the web of filter material 2, a series of plastic strips 3 is being extruded onto the surface 4 of the web of filter material 2. As the filter material of the web has a somewhat fibrous character, the still hot and soft plastic material make that the strips 3 directly adhere to the web of filter material 2.

A drain pipe 5 is positioned parallel to the web of filter material 2. Said drain pipe has a corrugated character and comprises alternating crests 6 and valleys 7. In the valleys, the wall of the drain pipe 5 is provided with drain apertures 8. The drain pipe 5 and the web of filter material are advanced through a shaping mould 9 which consists of the generally flat front part 10, a generally cylindrical aft part 11 and a transition part 12 which gradually merges the flat front part 10 into the cylindrical aft part 11. During this process, the longitudinal edges 14, 15of the web of filter material 5 come to overlap each other.

Thus, upon the advancement of the web of filter material 2 together with the drain pipe 5 through the shaping mould, said web of filter material 5 is gradually transformed in a sleeve of filter material 13. This sleeve of filter material 13 is obtained by connecting the overlapping edges 14, 15 to each other, such as by gluing, by a hot melt etc.

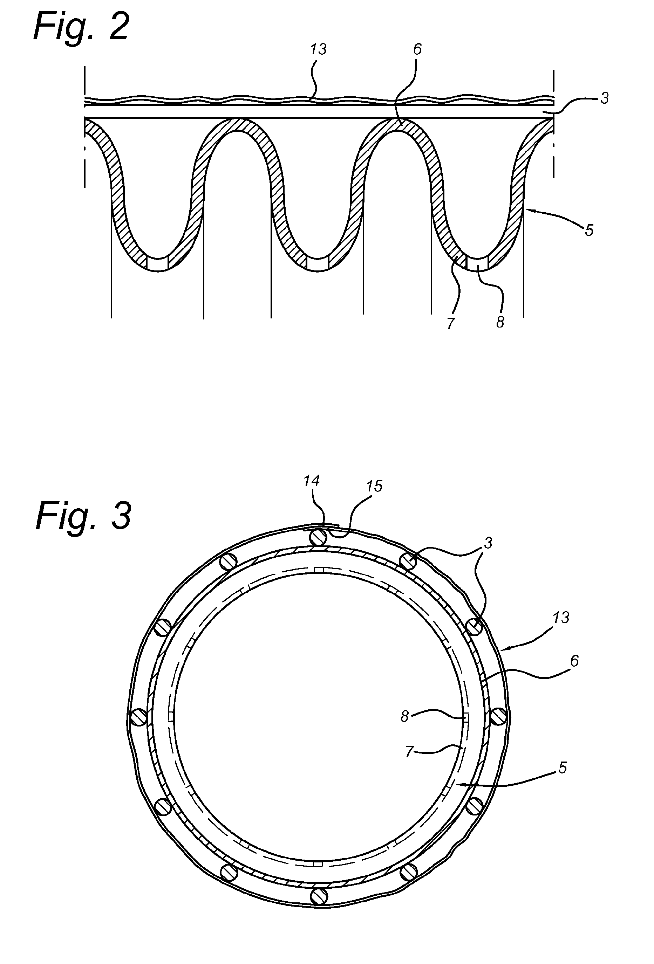

As shown in figures 2 and 3, the strips 3 are merely held against the crests 6 of the drain pipe. It is not necessary to connect the strips 3 to these crests 6 as they are held caught by the surrounding sleeve 13 of web material. Nevertheless it is possible to apply a connection as well, e.g. by gluing the strips 6 to the crests 3.

## Claims

1. Method for manufacturing a drain system, comprising the steps of:
- providing a drain pipe (5) having drain apertures (8),
- providing an elongate web of filter material (2),
- simultaneously displacing the drainage pipe (5) and the web of filter material (2) in longitudinal direction thereof,
- while displacing the web of filter material (2), applying strips (3) on said web which are located next to each other in transverse direction of the web and which extend in the longitudinal direction of the web,
- while simultaneously displacing the drain pipe (5) and the web of filter material (3), applying the web of filter material with the strips around and onto the drain pipe.

2. Method according to claim 1, comprising the step of applying the strips (3) onto the surface (4) of the web of filter material (2) which is to face the drain pipe (5).

3. Method according to claim 1 or 2, comprising the step of making overlap the longitudinal edges (14, 15) of the web of filter material (2) applied around the drain pipe (5) and connecting said longitudinal edges to each other.

4. Method according to any of the preceding claims, comprising the step of making the strips (3) adhere to the web of filter material (2).

5. Method according to any of the preceding claims, comprising the step of directly applying the strips (3) onto the web of filter material (2) by extrusion.

6. Method according to any of the preceding claims, comprising the steps of providing a corrugated pipe (5) having crests (6) and valleys (7) which extend in the circumferential direction of the drain pipe, and of making the strips (3) abut the top of the crests.

7. Apparatus for carrying out the method according to claim 6, comprising a frame having a roll suspension means for accommodating a roll of filter web material, a support device for supporting and displacing a drain pipe in the longitudinal direction thereof, a form piece around the support device for the purpose of transforming the web of filter material into a closed sleeve around the drain pipe, an extrusion device between the roll suspension means and the form piece for extruding a series of strips on the web of filter material while displacing said web of filter material and a closure device for connecting the longitudinal edges of the sleeve to each other while displacing said sleeve

8. Drain system manufactured according to the method according to any of claims 1-6, comprising a drain pipe (5) having alternating crests (6) and valleys (7) which extend in the circumferential direction of the drain pipe and having drain apertures (8), a sleeve of filter material (13) around the drain pipe, strips which extends in the longitudinal direction of the sleeve which are connected to said sleeve and which are located on the surface of the sleeve facing said drain pipe, **characterized in that** the strips (3) are freely abutting the crests (6) of the drain pipe (5).
